# EUROPEAN PATENT SPECIFICATION

(11) **EP 0 942 425 B1**
(45) Date of publication and mention of the grant of the patent: **05.07.2006**
(21) Application number: 99301894.4
(22) Date of filing: 12.03.1999
(51) Int. Cl.: G11B 25/06, G11B 21/00, G11B 5/41, G11B 5/11

(54) **Tape drive head cleaner**
Bandantriebkopfreiniger
Nettoyeur de tête d'entraînement de bande

(30) Priority: 13.03.1998 US 42323; 06.11.1998 US 187138
(43) Date of publication of application: 15.09.1999
(73) Proprietor: Hewlett-Packard Company A Delaware Corporation, Palo Alto, CA 94304 (US)
(72) Inventor: Anderson, James C., Eagle, Idaho 83616 (US); Bloomquist, Darrel R., Meridian, Idaho 83642 (US)
(74) Representative: Carpmaels & Ransford

(56) References cited:
- EP-A- 0 530 837
- EP-A- 0 800 162
- US-A- 4 556 890
- US-A- 5 710 684

## Description

### FIELD OF THE INVENTION

The invention relates generally to tape drives and, more particularly, to a tape drive head cleaner that uses a cleaning pad mounted in the tape drive.

### BACKGROUND OF THE INVENTION

Information is recorded on and read from a moving magnetic tape with a magnetic read/write head positioned next to the tape. The magnetic "head" may be a single head or, as is common, a series of read/write head elements arranged individually and/or in pairs within the head unit. Data is recorded in tracks on the tape by moving the tape lengthwise past the head. The head elements are selectively activated by electric currents representing the information to be recorded on the tape. The information is read from the tape by moving the tape longitudinally past the head elements so that magnetic flux patterns on the tape create electric signals in the head elements. These signals represent the information stored on the tape.

The performance of the head may be adversely effected by debris that often accumulates on the head. Consequently, the head should be cleaned periodically to remove debris. Several different techniques and devices have been used to clean the head. Cleaning tape cartridges use abrasive tape to clean the head. U.S. Patent No. 5,671,108 describes an open cell foam cleaning pad used in a cleaning cartridge instead of a cleaning tape.

The head cleaning device is built into some tape drives. The IBM Magstar 3590^{™} tape drive, for example, includes a cleaning brush that contacts the head during the tape threading operation. As the leader block on the tape is pulled into the tape cartridge, the leader block hits a lever that brings the cleaning brush into contact with the head. An actuator moves the head up and down to provide a scrubbing action between the head and the brush.

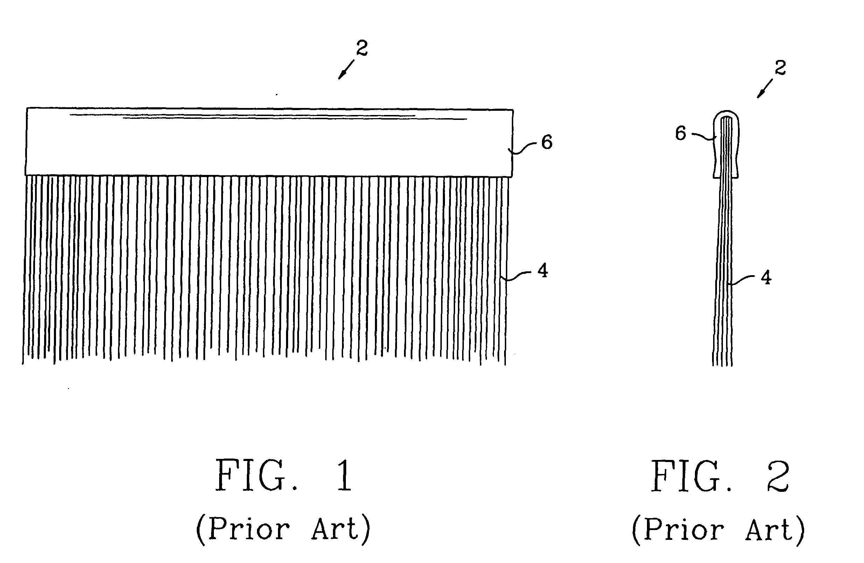

A prior art brush, such as the brush used in the IBM Magstar 3590, is shown in the front and side elevation views of Figs. 1 and 2. These brushes 2 are quite narrow since the bristles 4 are crimped into a holder 6. If a wider brush is desired, multiple brushes are placed side by side. This configuration adds to the cost and complexity of the cleaning device. Also, since the holder must grasp the bristles, it is not possible to make a brush that is very short, about 2-3 mm, along the length of the bristles. Hence, some tape drive designs may not have enough room to accommodate this type of cleaning brush. Further, it is difficult to hold the bristles securely in place using crimped holder brushes. Any stray bristles that are dislodged from the holder during brushing operations could seriously effect the performance of the tape drive, or even cause the drive to fail.

EP-A-0800162, which is considered to present the closest date of the art, discloses an oscillating magnetic head and stationary brush cleaning apparatus. The cleaning apparatus cleans the air bearing surface of a magnetic head of a tape drive by employing components of an actuator for oscillating the magnetic head against bristles of a brush assembly. The brush is formed by crimping the bristles into slots in the brush assembly.

EP-A-0530837 discloses a similar brush for cleaning magnetic heads to that disclosed in EP 0800162.

US-A-5,710,684 discloses a cleaning mechanism for a magnetic head and a method of producing a cleaning brush having brush pieces integrally moulded with a resin block.

GB 352330 discloses improvements in or relating to body brushes in which bristles are caused to project through perforations in a sheet, of rubber for example, and are held by the fixation of another sheet to the back of the first sheet.

GB 1084766 discloses improvements in or relating to the manufacture of bristle-surface products in which loops of bristle material are formed on a flexible backing, either with or without a locking filament on the rear of the backing. The loops can be cut to form single bristles.

### SUMMARY OF THE INVENTION

Accordingly, the present invention is directed to a head cleaning device as claimed hereinafter that utilizes a cleaning pad to help overcome some of the disadvantages of conventional head cleaners. A tape drive, as claimed hereinafter, is also provided.

### DESCRIPTION OF THE DRAWINGS

Fig. 1 is a front elevation view of a prior art cleaning brush.
Fig. 2 is a side elevation view of the prior art cleaning brush of Fig. 1.
Fig. 3 is a simplified partial perspective view of the inside of a tape drive showing one type of cleaning mechanism that incorporates the cleaning pad of the present invention.
Fig. 4 is a plan view of the tape drive of Fig. 3.
Fig. 5 is a detail perspective view of one embodiment of the cleaning pad shown in the tape drive of Fig. 3.
Fig. 6 is a partial cross section view of the cleaning pad of Fig. 4 showing one configuration for integrating the bristle fibers into the backing material.
Fig. 7 is a cross section view of the cleaning pad attached to the end of the arm of the cleaning mechanism of Fig. 3 in which the pad extends around the sides of the arm to move any loose fibers at the edges of the cleaning pad away from contact with the head.
Fig. 8 is a perspective view of the cleaning pad mounted to a form having ends crimped over the cut ends of the pad to contain any loose fibers.
Fig. 9 is a perspective view of the cleaning pad mounted to a form having a bead of adhesive placed along the cut ends of the pad to contain any loose fibers.

### DETAILED DESCRIPTION OF THE INVENTION

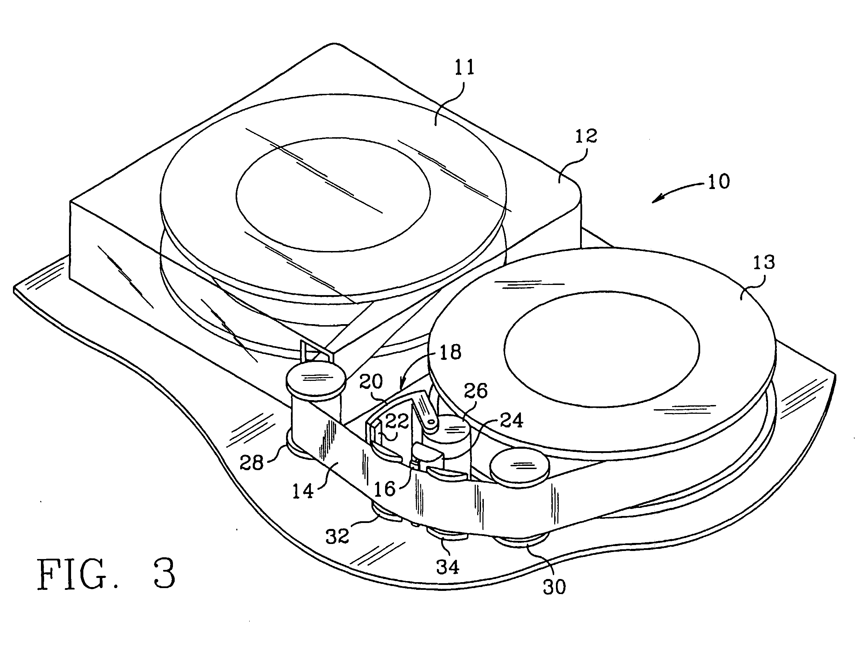

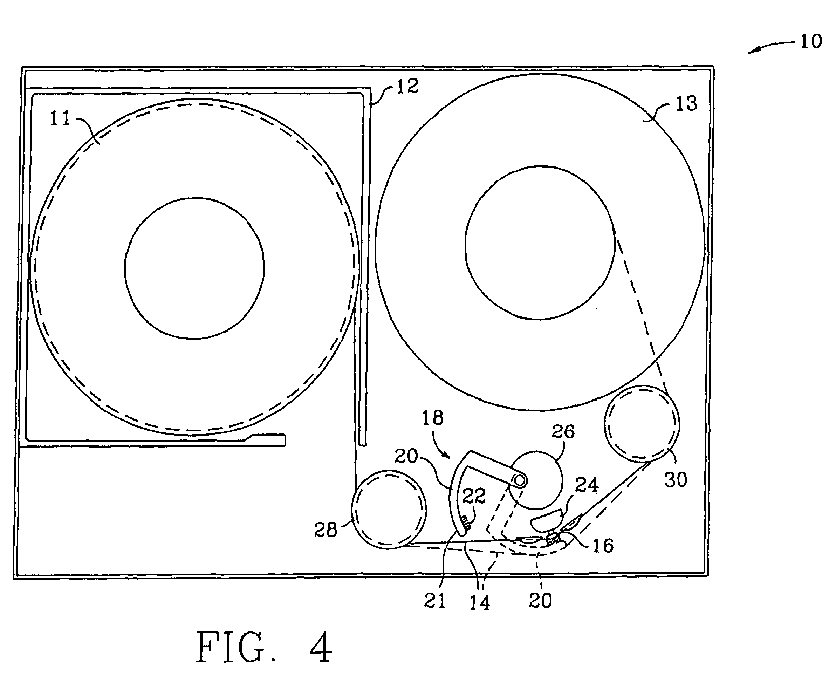

Figs. 3 and 4 illustrate the internal operating configuration of a tape drive 10 with a tape cartridge 12 loaded in tape drive 10. Tape 14 moves over a magnetic tape head 16. Head 16 typically contains a number of read/write head elements that read data from or write data to tape 14. Actuator 24 moves head 16 up and down to properly position the read/write elements relative to tape 14. A head cleaning mechanism, designated generally by reference number 18, includes an arm 20 and cleaning pad 22. Cleaning pad 22 is secured to the end 21 of arm 20. Arm 20, which serves as a carrier for pad 22, is mounted to a second actuator 26.

Tape 14 moves between a supply spool 11 in cartridge 12 and a take-up spool 13 in tape drive 10. Tape 14 travels around guide rollers 28 and 30 and optional stationary guides 32 and 34. During cleaning operations, arm 20 pivots out at the urging of arm actuator 26 so that cleaning pad 22 contacts head 18 as shown by the dotted lines in Fig. 4. Arm 20 and arm actuator 26 illustrate one mechanism for moving cleaning pad 22 into contact with head 16. Other mechanisms may be used. The particular mechanism used to move cleaning pad 22 into contact with head 16 is not important to the present invention except to the extent the mechanism carries cleaning pad 22 into contact with head 16. The details of the structure and operation of tape drive 10 are described in more detail in application Serial No. 09/042,323, entitled Head Cleaner For Linear Tape Drive and filed March 13, 1998.

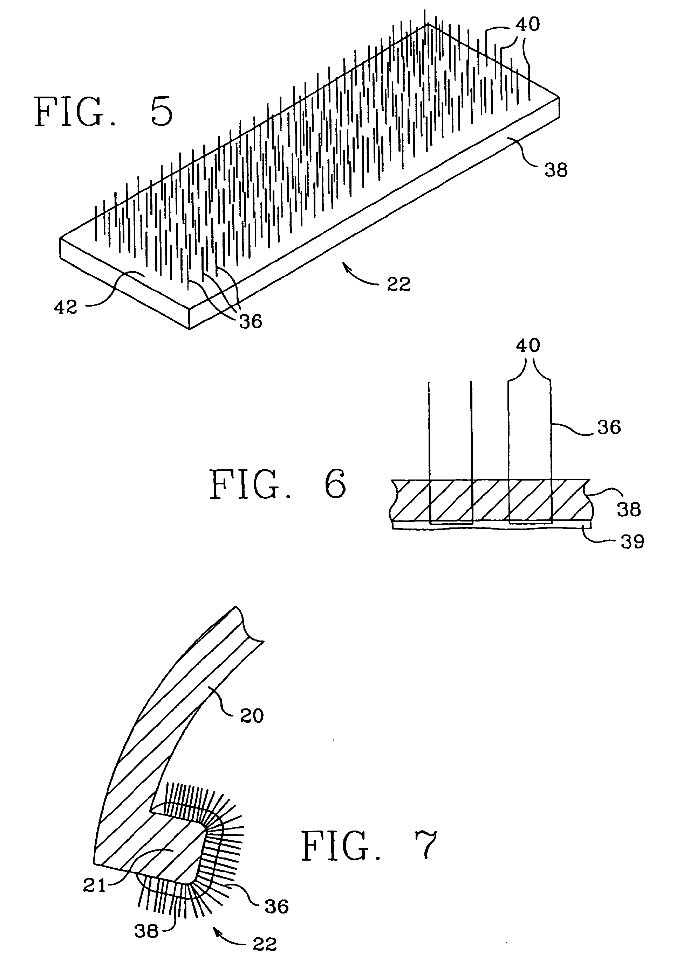

Referring now to Figs. 5 and 6, cleaning pad 22 includes cleaning fibers 36 integrated into a backing 38. Depending on the particular tape drive and/or the structure and configuration of the read/write head elements, however, cleaning fibers 36 may vary between a dense array of thin flexible filaments to a more open array of coarse stiff bristles. Preferably, arm actuator 26 is configured to move cleaning pad 22 and, correspondingly, fibers 36 back and forth across head 16. Similarly, head actuator 24, which is typically configured to move head 16 up and down, will add a vertical cleaning motion by moving head 16 up and down across cleaning pad 22. Fibers 36 should be formed or trimmed to the desired length leaving the ends 40 of the fibers 36 exposed for contacting head 16 during cleaning. It is desirable to leave the fiber ends exposed to reach into the small contours of a variety of different heads and head elements. If the fiber ends are looped to return to the backing, the fibers will not be as effective to reach into the small contours of the head.

Fibers 36 may be integrated into backing 38 using any suitable method. For example, fibers 36 may be sewn or woven into backing 38 and, preferably, further secured to the backing with an adhesive 39 (shown in Fig. 6). It is desirable to make fibers 36 from an electrically conductive or statically dissipative material to minimize the build up of static charge during cleaning operations when fibers 36 are brushing against head 16. Suitable materials include, for example, coated synthetic fibers, carbon and stainless steel. Backing 38 and/or adhesive 39 should also be made from a statically dissipative or conductive material so that the entire cleaning pad 22 may be easily grounded to further reduce static charge build up.

The cleaning pad of the present invention allows the length of cleaning pad 22 in the fiber direction to be shorter than conventional crimped cleaning brushes. This feature allows the use of cleaning pad 22 in tape drives that otherwise would not accommodate a cleaning mechanism.

Cleaning pad 22 may be manufactured to any desired size and shape. Hence, there is no need to secure multiple pads together to construct "wide" cleaners as with conventional brush designs.

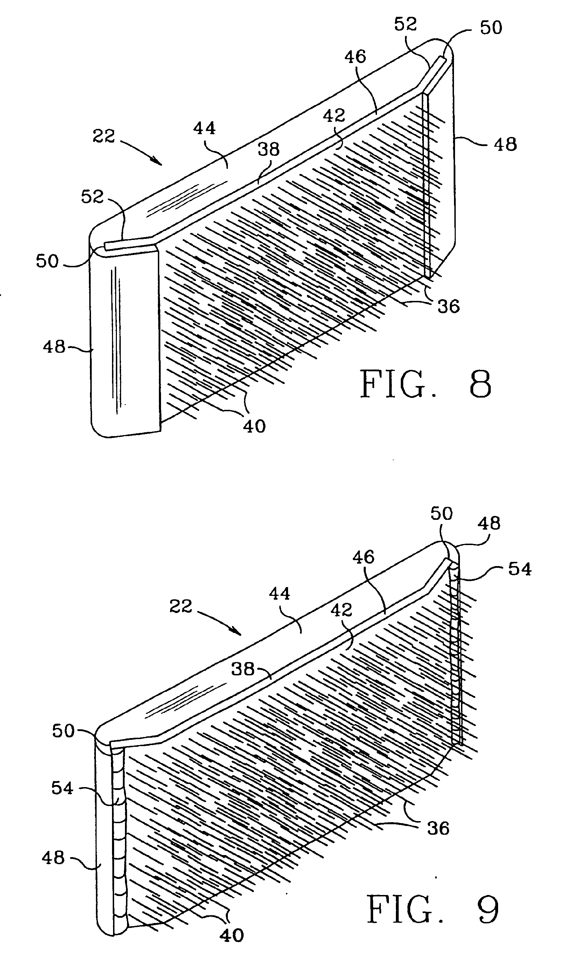

A variety of techniques could be used to manufacture cleaning pad 22. For example, a large piece of backing in which the cleaning fibers have been woven could be stamped into the desired pattern(s) for cleaning pads 22. To eliminate loose fibers at the edges of the cuts, which might be dislodged during cleaning operations, the fibers could be woven into the backing in the desired pattern leaving a cutting space between adjacent cleaning pad patterns. Individual cleaning pads 22, shown in Fig. 5, can then be cut through the cutting spaces to produce a border area 42 around each cleaning pad 22 so that there are no loose fibers at the cut edges. Alternative techniques to minimize the risk of dislodging loose edge fibers are illustrated in Figs. 7-9. In Fig. 7, cleaning pad 22 is wrapped around the end 21 of arm 20. Wrapping cleaning pad 22 in this fashion moves the cut ends/edges away from the area of the pad that contacts head 16. In the embodiments of Figs. 8 and 9, cleaning pad 22 is mounted to a form 44. Fibers 36 of cleaning pad 22 are woven to the desired width so that there are no loose fibers along the lengthwise edge 46. In Fig. 8, the ends 48 of form 44 are crimped (for a metal form 44) over cut ends 50 to contain loose fibers. If form 44 is molded from plastic, pockets 52 are formed to contain any loose fibers at the cut ends 50. Pad 22 may be secured to plastic form 44 by, for example, gluing the pad to the form and/or heat crimping pockets 52 on to the pad. In Fig. 9, a bead of adhesive material 54 is placed along cut ends 50 to contain loose fibers. Form 44 may be curved if necessary or desirable to keep the crimped ends 48 or bead of adhesive material 54 from contacting the head of the tape drive during cleaning operations. Form 44 may be constructed as a discrete component secured to arm/carrier 20. Alternatively, form 44 maybe formed integral to arm 20.

While the present invention has been shown and described with reference to the foregoing exemplary embodiments, it is to be understood that other forms and details may be made thereto without departing from the scope of the invention as defined by the claims. The cleaning pad of the present invention, for example, is not limited to use with a magnetic head in the linear tape drive described and shown above. The cleaning pad might also be used in connection with any of a variety of storage devices that use magnetic or other types of transducer heads, including both linear and helical scan tape drives. The invention, therefore, is to be construed broadly within the scope of the following claims.

## Claims

1. A head cleaning device for a tape drive, comprising a cleaning pad (22) mounted to a carrier (20) disposed adjacent to a transducer head (16), the pad (22) having a multiplicity of cleaning fibers (36) woven or sewn into and projecting from a backing (38).

2. The head cleaning device according to Claim 1, wherein the cleaning fibers (36) and the backing are made from an electrically conductive or electro-statically dissipative material.

3. The head cleaning device according to Claim 1, further comprising a border area (42) on the backing (38), the border area (42) being free of fibers.

4. The head cleaning device according to claim 1, wherein the cleaning pad (22) is mounted to the carrier (20) via a form (44), the form (44) secured to the carrier (20), the form (44) configured to contain loose fibers (36) on the pad.

5. The head cleaning device according to Claim 4, wherein a portion of the form (44) is crimped over the pad (22) to contain loose fibers (36) on the pad (22).

6. The cleaning device according to Claim 4, wherein the form (44) includes a pocket (52) over ends of the pad (22) to contain loose fibers (36) on the pad (22).

7. The cleaning device according to Claim 4, wherein the form (44) is integral to the carrier (20).

8. A tape drive, comprising:
a transducer head (16);
an actuator (24) operatively coupled to the head (16), the actuator (24) configured to move the head (16) in a direction generally perpendicular to the direction of motion of the tape over the head (16);
a cleaning mechanism configured to engage the head (16), the cleaning mechanism comprising a cleaning pad (22) mounted to a carrier (20), the pad (22) having a multiplicity of cleaning fibers (36) woven or sewn into and projecting from a backing (38).

9. The tape drive according to Claim 8, further comprising a second actuator (26) operatively coupled to the carrier (20), the second actuator (26) configured to move the cleaning pad (22) in a direction generally parallel to the direction of motion of the tape over the head (16).

10. The tape drive according to Claim 8, wherein the carrier (20) comprises an arm (20) having an end (21) at one extremity, the end (21) **characterized by** a face facing the head (16) when the arm (20) is in a cleaning position and sides extending from the face, the cleaning pad (22) wrapped around the end (21) of the arm (20) so that side edges of the cleaning pad (22) are disposed along the sides of the end (21) of the arm (20).

## Patentansprüche

1. Eine Kopfreinigungsvorrichtung für ein Bandlaufwerk, die eine Reinigungsanschlussfläche (22) aufweist, die an einem Träger (20) befestigt ist, der benachbart zu einem Wandlerkopf (16) angeordnet ist, wobei die Anschlussfläche (22) eine Mehrzahl von Reinigungsfasern (36) aufweist, die in eine Stützeinrichtung (38) eingewebt oder genäht sind und von derselben hervorstehen.

2. Die Kopfreinigungsvorrichtung gemäß Anspruch 1, bei der die Reinigungsfasern (36) und die Stützeinrichtung aus einem elektrisch leitfähigen oder einem elektrostatisch dissipativen Material hergestellt sind.

3. Die Kopfreinigungsvorrichtung gemäß Anspruch 1, die ferner einen Grenzbereich (42) auf der Stützeinrichtung (38) aufweist, wobei der Grenzbereich (42) frei von Fasern ist.

4. Die Kopfreinigungsvorrichtung gemäß Anspruch 1, bei der die Reinigungsanschlussfläche (22) an dem Träger (20) über eine Form (44) befestigt ist, wobei die Form (44) an dem Träger (20) befestigt ist, wobei die Form (44) konfiguriert ist, um lose Fasern (36) auf der Anschlussfläche zu enthalten.

5. Die Kopfreinigungsvorrichtung gemäß Anspruch 4, bei der ein Abschnitt der Form (44) über die Anschlussfläche (22) geheftet ist, um lose Fasern (36) auf der Anschlussfläche (22) zu enthalten.

6. Die Reinigungsvorrichtung gemäß Anspruch 4, bei der die Form (44) eine Tasche (52) über Enden der Anschlussfläche (22) umfasst, um lose Fasern (36) auf der Anschlussfläche (22) zu enthalten.

7. Die Reinigungsvorrichtung gemäß Anspruch 4, bei der die Form (44) einstückig mit dem Träger (20) ist.

8. Ein Bandlaufwerk, das folgende Merkmale aufweist:
einen Wandlerkopf (16);
eine Betätigungseinrichtung (24), die wirksam mit dem Kopf (16) gekoppelt ist, wobei die Betätigungseinrichtung (24) konfiguriert ist, um den Kopf (16) in einer Richtung im Allgemeinen senkrecht zu der Bewegungsrichtung des Bandes über den Kopf (16) zu bewegen;
einen Reinigungsmechanismus, der konfiguriert ist, um den Kopf (16) in Eingriff zu nehmen, wobei der Reinigungsmechanismus eine Reinigungsanschlussfläche (22) aufweist, die an einem Träger (20) befestigt ist, wobei die Anschlussfläche (22) eine Mehrzahl von Reinigungsfasern (36) aufweist, die in die Stützeinrichtung eingewebt oder genäht sind und von derselben hervorstehen.

9. Das Bandlaufwerk gemäß Anspruch 8, das ferner eine zweite Betätigungseinrichtung (26) aufweist, die wirksam mit dem Träger (20) gekoppelt ist, wobei die zweite Betätigungseinrichtung (26) konfiguriert ist, um die Reinigungsanschlussfläche (22) in einer Richtung im Allgemeinen parallel zu der Richtung der Bewegung des Bandes über den Kopf (16) zu bewegen.

10. Das Bandlaufwerk gemäß Anspruch 8, bei dem der Träger (20) einen Arm (20) mit einem Ende (21) an einem Endpunkt aufweist, wobei das Ende (21) durch eine Fläche, die dem Kopf (16) zugewandt ist, wenn der Arm (20) in einer Reinigungsposition ist, und Seiten, die sich von der Fläche erstrecken, **gekennzeichnet** ist, wobei die Reinigungsanschlussfläche (22) so um das Ende (21) des Arms (20) gewickelt ist, dass die Seitenränder der Reinigungsanschlussfläche (22) entlang der Seiten des Endes (21) des Arms (20) angeordnet sind.

## Revendications

1. Dispositif de nettoyage de tête pour un dérouleur de bande magnétique, comprenant un tampon nettoyeur (22) monté sur un support (20) disposé de façon adjacente à une tête de transducteur (16), le tampon (22) présentant une multiplicité de fibres nettoyantes (36) tissées ou cousues dans et faisant saillie depuis un renforcement (38).

2. Dispositif de nettoyage de tête selon la revendication 1, dans lequel les fibres nettoyantes (36) et le renforcement sont composés d'une matière conductrice électriquement ou dissipative électrostatiquement.

3. Dispositif de nettoyage de tête selon la revendication 1, comprenant en outre une zone de bordure (42) sur le renforcement (38), la zone de bordure (42) étant exempte de fibres.

4. Dispositif de nettoyage de tête selon la revendication 1, dans lequel le tampon nettoyeur (22) est monté sur le support (20) par l'intermédiaire d'une forme (44), la forme (44) étant fixée au support (20), la forme (44) étant configurée pour contenir de la bourre (36) sur le tampon.

5. Dispositif de nettoyage de tête selon la revendication 4, dans lequel une partie de la forme (44) est sertie sur le tampon (22) afin de contenir de la bourre (36) sur le tampon (22).

6. Dispositif de nettoyage de tête selon la revendication 4, dans lequel la forme (44) comprend une poche (52) sur les extrémités du tampon (22) afin de contenir de la bourre (36) sur le tampon (22).

7. Dispositif de nettoyage de tête selon la revendication 4, dans lequel la forme (44) est intégrée au support (20).

8. Dérouleur de bande magnétique comprenant :
une tête de transducteur (16) ;
un actionneur (24) couplé de manière opérationnelle à la tête (16), l'actionneur (24) étant configuré pour déplacer la tête (16) dans une direction généralement perpendiculaire à la direction de mouvement de la bande sur la tête (16) ;
un mécanisme de nettoyage configuré pour mettre en prise la tête (16), le mécanisme de nettoyage comprenant un tampon nettoyeur (22) monté sur une support (20), le tampon (22) présentant une multiplicité de fibres nettoyantes (36) tissées ou cousues dans et faisant saillie depuis un renforcement (38).

9. Dérouleur de bande magnétique selon la revendication 8, comprenant en outre un second actionneur (26) couplé de manière opérationnelle au support (20), le second actionneur (26) étant configuré pour déplacer le tampon nettoyeur (22) dans une direction généralement parallèle à la direction de mouvement de la bande sur la tête (16).

10. Dérouleur de bande magnétique selon la revendication 8, dans lequel le support (20) comprend un bras (20) ayant une extrémité (21) au niveau d'un bout, l'extrémité (21) étant **caractérisée par** une face faisant face à la tête (16) quand le bras (20) est dans une position de nettoyage et des côtés s'étendant depuis la face, le tampon nettoyeur (22) étant enroulé autour de l'extrémité (21) du bras (20) afin que les bords d'extrémité du tampon nettoyeur (22) soient disposés le long des côtés de l'extrémité (21) du bras (20).
